# EUROPÄISCHE PATENTANMELDUNG

(11) **EP 2 730 164 A2**
(43) Veröffentlichungstag der Anmeldung: **14.05.2014**
(21) Anmeldenummer: 13192583.6
(22) Anmeldetag: 12.11.2013
(51) Int. Cl.: A01L 5/00

(54) **Hufschutz aus Kunststoff**

(30) Priorität: 12.11.2012 DE 102012110813
(71) Anmelder: marvida GmbH & Co KG, 67227 Frankenthal (DE)
(72) Erfinder: Flach, Anton, 86975 Bernbeuren (DE)
(74) Vertreter: Katscher Habermann Patentanwälte

(57) **Zusammenfassung**

Ein Hufschutz (1) aus Kunststoff weist einen U-förmigen Randbereich (2) auf, der an einer Unterseite (3) ein eine Aufstandsfläche (6) bildendes Profil (5) aufweist, sowie eine Strahlstütze (8), die über Stege (10) mit Schenkelenden (12) des Randbereichs (2) verbunden ist, wobei die Strahlstütze (8) in einem mittleren Bereich auf der Aufstandsfläche (6) aufsteht und allseitig über eine elastische Sohlenabdeckung (13) mit dem Randbereich (2) verbunden ist. Die Strahlstütze (8) weist an ihrer Unterseite (3) ebenfalls ein Profil (9) auf. Auf einer Oberseite des Hufschutzes (1) sind elastische Zwischenelemente lösbar angeordnet. Zwischen den V-förmig angeordneten Stegen (10) ist eine Sollbruchstelle (11) ausgebildet. Die Unterseite (3) des Randbereichs (2) ist in einem vorderen Bereich (14) und in einem hinteren Bereich (16) in einem Winkel zur Aufstandsfläche (6) geneigt. In dem Randbereich (2) ist eine Einlage eingebettet.

## Beschreibung

Die Erfindung betrifft einen Hufschutz aus Kunststoff mit einem U-förmigen Randbereich, der an einer Unterseite ein eine Aufstandsfläche bildendes Randprofil aufweist oder mit einem eine Aufstandsfläche bildenden Randprofil verbindbar ist, und mit einer Strahlstütze, die über Stege mit Schenkelenden des Randbereichs verbunden ist.

Es seit vielen Jahren bekannt, dass Pferde und andere Huftiere anstelle eines metallischen Hufeisens auch mit einem Hufschutz aus Kunststoff ausgestattet werden können. Als wesentliche Vorteile eines Hufschutzes aus Kunststoff werden eine verbesserte Rutschfestigkeit und Trittdämpfung angesehen. Durch die Verwendung von Kunststoff-Verbundmaterialien oder neuartigen Kunststoffmaterialien ist es seit wenigen Jahren auch möglich, einen abriebfesten Hufschutz aus Kunststoff oder aus einem Kunststoffverbundmaterial herzustellen, der in einigen Anwendungsfällen eine ausreichend lange Nutzungsdauer ermöglicht. Allerdings hat sich gezeigt, dass bei einem beanspruchenden Einsatz des Hufschutzes aus Kunststoff, wie er beispielsweise bei Zugtieren von Kutschen erfolgt, die Nutzungsdauer oftmals zu gering ist, bevor der Hufschutz aus Kunststoff ausgetauscht und erneuert werden muss.

Aus der Praxis sind verschiedene Formgebungen für einen Hufschutz aus Kunststoff bekannt. Im Gegensatz zu der klassischen Hufeisen-Formgebung, die im Wesentlichen einen U-förmigen Randbereich aufweist, sind aus der Praxis verschiedene Formgebungen bekannt, die jeweils an unterschiedliche Anforderungen angepasst wurden und verschiedene Vorzüge aufweisen können.

Aus DE 296 13 691 U1 ist ein Hufschutz aus Kunststoff mit den eingangs genannten Merkmalen bekannt. Durch die profilierte Unterseite wird eine hohe Rutschfestigkeit des Hufschutzes gewährleistet. Eine über Stege mit den Schenkelenden des profilierten Randbereichs verbundene Strahlstütze können wachstumsfördernde Reize auf den Hufstrahl ausgeübt werden, der bei einem klassischen Hufeisen grundsätzlich nicht druckbelastet wird und deshalb verkümmert.

Es hat sich jedoch gezeigt, dass mit einer elastisch mit den Schenkelenden des Randbereichs verbundenen Strahlstütze der Hufstrahl nicht in der gewünschten Weise wachstumsfördernd angeregt werden kann. Zudem ist es mit dem aus dem Stand der Technik bekannten Hufschutz nicht oder in geringem Maße möglich, die während eines Bewegungsablaufs anfallenden Gewichts- und Bewegungskräfte in einer der jeweiligen Hufarchitektur angepassten Weise auf den Boden zu übertragen. Hufkrankheiten und Erkrankungen des gesamten Bewegungsapparates bis hin zur Wirbelsäule sind die Folge von kontinuierlichen Fehlbelastungen. Es kann mit herkömmlichen Hufschutzformen und Beschlagsmethoden auch nicht auf individuelle Besonderheiten einzelner Hufe oder Körperbesonderheiten wie beispielsweise Schulter- und Hüftschiefstände)eingegangen werden, um beispielsweise Fehlstellungen korrigieren oder therapeutisch bzw. heilend auf Hufkrankheiten oder orthopädische Probleme des Huftiers einzuwirken.

Es wird deshalb als eine Aufgabe der vorliegenden Erfindung angesehen, einen Hufschutz der eingangs genannten Gattung so auszugestalten, dass ein angenehmes und sicheres Auftreten des Hufes ermöglicht und gegebenenfalls eine therapeutische Wirkung unterstützt oder bewirkt werden kann.

Diese Aufgabe wird erfindungsgemäß dadurch gelöst, dass die Strahlstütze in einem mittleren Bereich auf der Aufstandsfläche aufsteht und allseitig über eine elastische Sohlenabdeckung mit dem Randbereich verbunden ist. Durch die auf der Aufstandsfläche aufstehende Strahlstütze können bei jedem Bodenkontakt des Hufschutzes bzw. des mit diesem Hufschutz versehenen Hufs zuverlässig große Kräfte auf den Hufstrahl, das Strahlpolster und die Hufsohle ausgeübt werden. Da die Strahlstütze bei einem Auftreten nicht ausschließlich über die Stege mit den Schenkelenden des Randbereichs des Hufschutzes verbunden ist und abgestützt wird, sondern zusätzlich bzw. maßgeblich auf dem Boden abgestützt wird, können unabhängig von der Ausgestaltung der Stege große Druckkräfte auf den Hufstrahlbereich ausgeübt werden. Durch die elastische Sohlenabdeckung links und rechts der Strahlstütze ist die Strahlstütze seitlich mit dem umgebenden Randbereich verbunden und wird in horizontaler Richtung relativ zu dem Randbereich abgestützt, so dass eine unbeabsichtigte seitliche Verlagerung der Strahlstütze während des Auftretens mit dem Hufschutz verhindert wird. Die Sohlenabdeckung ist jedoch ausreichend elastisch, um Unebenheiten des Bodenbelags während des Auftretens ausgleichen zu können.

Gemäß einer besonders vorteilhaften Ausgestaltung des Erfindungsgedankens ist vorgesehen, dass auf einer Oberseite des Hufschutzes elastische Zwischenelemente lösbar angeordnet sind. Mit den Zwischenelementen können die Hohlräume zwischen der Oberseite des Hufschutzes und dem damit versehenen Huf, bzw. der Hufsohle individuell ausgefüllt werden. Die Zwischenelemente können unterschiedliche Formgebungen und verschiedene Abmessungen aufweisen. Zudem ist es möglich, durch geeignete ausgestaltete Zwischenelemente therapeutisch auf die Unterseite des Hufes und insbesondere auf das Hufbein einzuwirken und durch gezielt vorgegebene Druckbelastungen während des Auftretens einzelne Bereiche des Hufs modellierend das Wachstum der drüber befindlichen Hornstruktur anzuregen oder aber zu entlasten. Zudem kann durch eine geeignete Anordnung und Ausgestaltung der elastischen Zwischenelemente einer Hufbeinfehlstellung oder Ganganomalien entgegengewirkt werden. Bei den elastischen Zwischenelementen kann es sich beispielsweise um elastische Kunststoffmaterialien, um elastisch aushärtende antibakteriell wirkende Polymerkleber oder aber um stoßdämpfende Polster aus natürlichen Materialien wie beispielsweise Naturbaumwolle, Schafwolle oder Werk handeln. Durch das Ausfüllen von Hohlräumen, die auf Grund der jeweils individuellen Formgebung der Unterseite der Hufe unvermeidbar auftreten, kann das Eindringen von Schmutz und Partikeln verhindert werden, die infolge der kontinuierlichen Belastung während des Auftretens mit dem Huf Irritationen und wundgescheuerte Bereiche hervorrufen können.

Vorzugsweise ist vorgesehen, dass an der Oberseite des Hufschutzes Ausnehmungen zur Aufnahme von elastischen Zwischenelementen ausgebildet sind. Die Ausnehmungen sind zweckmäßigerweise an die für viele therapeutische Behandlungen vorteilhaften Positionen und Formgebungen der elastischen Zwischenelemente angepasst. Es hat sich gezeigt, dass eine auf der Oberfläche V-förmige, sich nach vorne verjüngende Anordnung der elastischen Zwischenelemente in vielen Fällen vorteilhaft ist.

Mit lediglich zwei verschiedenen Grundformen, nämlich einem geraden Abschnitt und einem näherungsweise halbkreisförmigen Abschnitt, kann aus zwei geraden Abschnitten und einem halbkreisförmigen Abschnitt ein V-förmiges mehrteiliges elastisches Zwischenelement gebildet werden. Die geraden und halbkreisförmigen Abschnitte können in unterschiedlichen Dicken und Breiten vorgesehen sein, so dass mit wenigen Grundformen vielfältige elastische Zwischenelemente gebildet werden können, die individuell an einen Huf des Pferdes und insbesondere an die Bedürfnisse der therapeutischen und orthopädischen Behandlung eines Pferdes angepasst werden, das an einer Hufkrankheit oder an einer Fehlstellung des Hufs oder an einer Beeinträchtigung des Bewegungsapparates leidet.

Zudem ist es in einfacher Weise möglich, zunächst vergleichsweise dicke und hohe elastische Zwischenelemente in die Ausnehmungen der Oberseite einzulegen, um in Abhängigkeit von dem bereits erzielten Therapieerfolg nach und nach jeweils dünnere bzw. flachere elastische Zwischenelemente zu verwenden, bis sich der Huf vollständig erholt hat.

Die elastischen Zwischenelemente können aus unterschiedlichen Materialien bestehen und insbesondere eine unterschiedliche Elastizität oder Verformungseigenschaft aufweisen.

Im Hinblick auf eine erhöhte Trittsicherheit und rutschhemmende Wirkung ist zweckmäßigerweise vorgesehen, dass die Strahlstütze an ihrer Unterseite ein Stützprofil aufweist. Die an der Strahlstütze ausgebildete Stützprofilfläche wird bei einem Auftreten mit dem Huf ebenfalls fest auf den Untergrund gedrückt und trägt ebenso wie der profilierte Randbereich zu der rutschhemmenden Wirkung der profilierten Aufstandsfläche bei.

Zweckmäßigerweise weist die an der Strahlstütze ausgebildete Stützprofilfläche ein sternförmiges Profil auf. Mit der Strahlstütze können der in der Standbeinphase der Hufbewegung die größten anfallenden mechanischen Drücke direkt auf den Boden abgeleitet werden. Diese Kräfte entlasten die Hufwand und führen zu einer physiologischen Korrektur der Gangmechanik und der Hufverformung. Es wird dadurch die tiefe Beugesehne entlastet, und für die darauf folgende Abfußphase in die notwendige Vorspannung gebracht. So wird die tiefe Beugesehne nur einmal, und zwar im richtigen Moment der Auffußphase belastet und die so oft auftretenden Schädigungen des Knorpelgewebes um das Strahlbein vermieden.

Das durchschnittliche Hornwachstum eines Pferdehufs beträgt etwa 2 mm pro Woche. Nach einigen Wochen ist der Huf um 1 bis 2 cm gewachsen. Da sich die Unterseite des Hufs während des Hornwachstums verändert und üblicherweise vergrößert ist vorgesehen, dass zwischen den V-förmigen Stegen eine Sollbruchstelle ausgebildet ist. Wenn sich die Schenkelenden des Randbereichs auf Grund des Hornwachstums auseinander bewegen, kann die zwischen den V-förmig angeordneten Stegen ausgebildete Sollbruchstelle aufbrechen und dadurch ermöglichen, dass die Schenkelenden des Randbereichs einen größeren Abstand zueinander einnehmen können. Die Schenkelenden des Randbereichs können in diesem Fall fest mit den zugeordneten Bereichen der Unterseite des Hufs verbunden sein und sich mit zunehmendem Hornwachstum voneinander entfernen. Da die Strahlstütze über die elastische Sohlenabdeckung über einen weiten Bereich ihres Umfangs mit dem umgebenden Randbereich verbunden und dadurch in ihrer Position fixiert ist, können die V-förmigen Stege nachgeben und eine Anpassung an die sich durch das Hornwachstum verändernde Unterseite des Hufs ermöglichen.

Um ein natürliches Abrollen des Hufs nach dem Auftreten mit dem Huf auf einem Untergrund zu erleichtern ist vorgesehen, dass die Unterseite des Randbereichs in einem vorderen Bereich in einem Winkel zur Auftrittsfläche geneigt ist. Der vordere Bereich des Randbereichs kann eine schräg verlaufende oder gekrümmt verlaufende Abrollfläche aufweisen. Durch die Verkürzung der Kontaktzeit während des Auftretens auf einem Untergrund und die Ermöglichung einer anatomisch günstigen Abrollbewegung werden die Gelenkbelastung und deren Verschleiß ebenso verringert wie die für das Auftreten und anschließende Anheben des Hufs erforderliche Muskelkraft reduziert.

In gleicher Weise ist vorgesehen, dass die Unterseite des Randbereichs in einem hinteren Bereich der Schenkelenden in einem Winkel zur Aufstandsfläche geneigt ist, um das Anfußverhalten über die individuelle Neigung der betreffenden Trachten in eine gerade Bewegungsrichtung zu überführen. Es kann durch die Neigung und Länge der Anfußphase die individuelle Trachtenbelastung gesteuert und die Ballenverschiebung korrigiert werden.

Der Hufschutz aus Kunststoff kann aus einem geeigneten Kunststoffmaterial hergestellt sein. das Kunststoffmaterial muss dabei einerseits ausreichend abriebsfest sein, um über einen Zeitraum von mehreren bzw. vielen Wochen den üblicherweise auftretenden Belastungen und mechanischen Beanspruchungen standhalten zu können. Andererseits sollte das Kunststoffmaterial auch eine vorteilhafte stoßdämpfende Wirkung aufweisen und eine möglichst hohe Trittsicherheit bzw. Rutschfestigkeit ermöglichen.

Es hat sich gezeigt, dass für eine ausreichende Festigkeit und gleichzeitig hohe Trittsicherheit der Hufschutz vorteilhafterweise aus einem Kunststoffmaterial mit einem Shore-A-Härtewert von 92 bis 94 besteht.

Um bei einem im Hinblick auf die stoßdämpfende und rutschhemmende Wirkung vorteilhaften Kunststoffmaterial die mechanische Stabilität und Abriebfestigkeit zu erhöhen ist erfindungsgemäß vorgesehen, dass in dem Randbereich eine Einlage eingebettet ist. Die Einlage kann beispielsweise aus Fasern oder aus einem mechanisch belastbaren und hochfesten Kunststoffmaterial bestehen. Durch die Einlage kann auch die Formsteifigkeit des Randbereichs und damit die Trittsicherheit bei seitwärts auftretenden Kräften oder Bewegungen verbessert werden.

Vorzugsweise ist vorgesehen, dass die Einlage ein Metallgeflecht oder ein Metallprofilelement ist. Das Metallgeflecht kann einlagig oder mehrlagig in dem Randbereich angeordnet und in das umgebende Kunststoffmaterial eingebettet sein. Das Metallprofilelement kann an einer einzigen Stelle oder an mehrfach an mehreren Stellen in dem Randbereich angeordnet, bzw. eingebettet sein. Durch die Einbettung in das umgebende Kunststoffmaterial wird zuverlässig vermieden, dass harte Bereiche oder vorspringende Ecken oder Kanten der Einlage mit der Unterseite des Hufs in Kontakt kommen und zu unerwünschten lokalen Druckbelastungen führen könnten.

Eine vorteilhafte Ausgestaltung des Erfindungsgedankens, die in den Figuren exemplarisch dargestellt ist, wird nachfolgend näher erläutert. Es zeigt:
Fig. 1 eine perspektivische Ansicht einer Unterseite eines Hufschutzes aus Kunststoff, der in einem Randbereich ein einstückig angeformtes Randprofil aufweist,
Fig. 2 eine perspektivische Ansicht einer Oberseite des in Fig. 1 gezeigten Hufschutzes aus Kunststoff,
Fig. 3 eine Schnittansicht des in den Fig. 1 und 2 dargestellten Hufschutzes längs der Linie III-III in den Fig. 1 und 2,
Fig. 4 eine perspektivische Ansicht einer Unterseite eines Hufschutzes aus Kunststoff, der einen flachen Randbereich ohne ein einstückig angeformtes Randprofil aufweist, und
Fig. 5 eine Schnittansicht des in Fig. 4 gezeigten Hufschutzes längs der Linie V-V in Fig. 4.

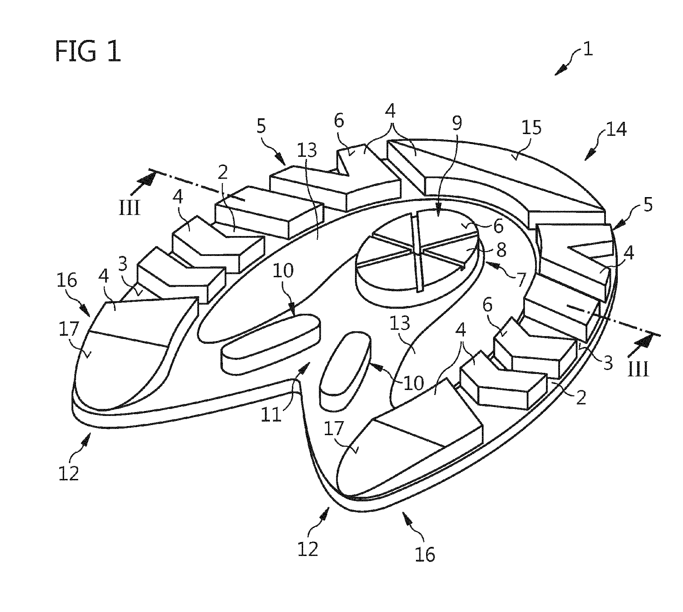

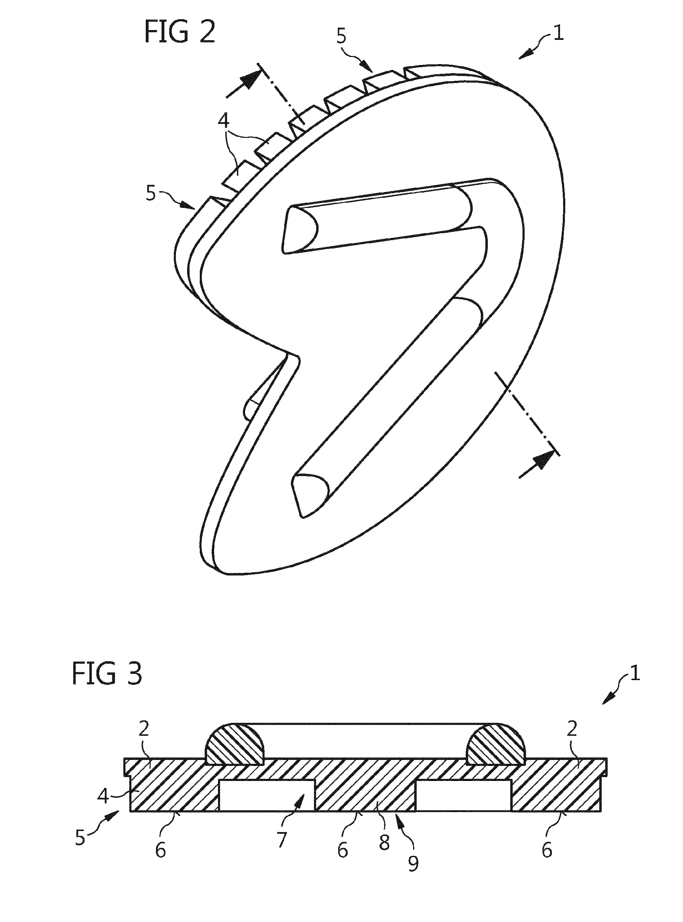

Ein in den Figuren 1 bis 3 dargestellter Hufschutz 1 weist einen näherungsweise U-förmigen Randbereich 2 auf, der in seiner Formgebung den aus dem Stand der Technik bekannten Hufeisen aus Metall ähnelt. Eine Unterseite 3 des Randbereichs 2 weist mehrere vorspringende Ausformungen 4 auf, die ein Randprofil 5 mit einer im Wesentlichen ebenen Aufstandsfläche 6 bilden. Die einzelnen Ausformungen 4 können V-förmig, abgewinkelt oder näherungsweise quaderförmig ausgestaltet sein.

In einem von dem Randbereich 2 umgebenen Innenbereich 7 ist eine Strahlstütze 8 angeordnet. Die Strahlstütze 8 weist ebenfalls ein Stützprofil 9 auf, das gemeinsam mit dem Randprofil 5 des Randbereichs 2 die Aufstandsfläche 6 bildet.

Die Strahlstütze 8 bewirkt bei einem Auftreten des Hufs auf einem Untergrund eine durch ihre Formgebung vorgebbare Druckbelastung im Hufstrahl des Hufs und fördert ein wünschenswertes Wachstum des Hufstrahls.

Die Strahlstütze 8 ist über V-förmig angeordnete Stege 10 mit Schenkelenden 11 des Randbereichs 2 verbunden. Zwischen den V-förmig angeordneten Stegen 10 ist ein Schwächungsbereich bzw. eine Sollbruchstelle 11 ausgebildet. Wenn mit zunehmender Tragezeit des Hufschutzes 1 eine Unterseite des Hufs durch das Hornwachstum größer wird, können die Sollbruchstellen 11 aufbrechen und die Schenkelenden 12 sich voneinander entfernen, so dass der Hufschutz 1 gleichsam mitwachsen kann.

Die Strahlstütze 8 ist über eine elastische Sohlenabdeckung 13 mit dem die Strahlstütze 8 umgebenden Randbereich 2 verbunden.

Das Randprofil 5 weist in einem vorderen Bereich 14 eine schräg verlaufende Abrollfläche 15 auf, die in einem Winkel zur Aufstandsfläche 6 geneigt ist. Ebenso weist das Randprofil 5 in einem hinteren Bereich 16 der Schenkelenden 12 eine weitere schräg verlaufende Abrollfläche 17 auf, die in einem Winkel zur Aufstandsfläche 6 geneigt ist.

An einer Oberseite 18 des Hufschutzes 1 ist eine V-förmige Ausnehmung 19 ausgebildet, in der elastische Zwischenelemente 20, 21 aus einem elastischen Kunststoffmaterial, vorzugsweise aus einem Kunststoffgel angeordnet sind. Die elastischen Zwischenelemente 20, 21 sind ein gerader Abschnitt 20 und ein näherungsweise halbkreisförmiger Abschnitt 21. Die elastischen Zwischenelemente 20, 21 befinden sich demzufolge zwischen der elastischen Sohlenabdeckung 13 und der Unterseite des Hufs und üben bei einem Auftreten des Pferdes auf den Huf eine orthopädisch vorteilhafte Druckkraft auf den Strahlbereich an der Unterseite des Hufs aus. Die elastischen Zwischenelemente 20, 21 können individuell an den jeweiligen Huf und dessen Unterseite angepasst werden. Die elastischen Zwischenelemente 20, 21 werden üblicherweise zusammen mit dem Hufschutz 1 mit einem geeigneten antibakteriellen dauerelastischen Polymerkleber an der Unterseite des Hufs festgeklebt. Durch die Ausnehmung 19 werden die elastischen Zwischenelemente 20, 21 zusätzlich in ihrer vorgesehenen Position fixiert.

Es ist ebenfalls möglich, den Hufschutz 1 an der Unterseite des Hufs festzunageln oder mit anderen konventionellen Mitteln zu befestigen.

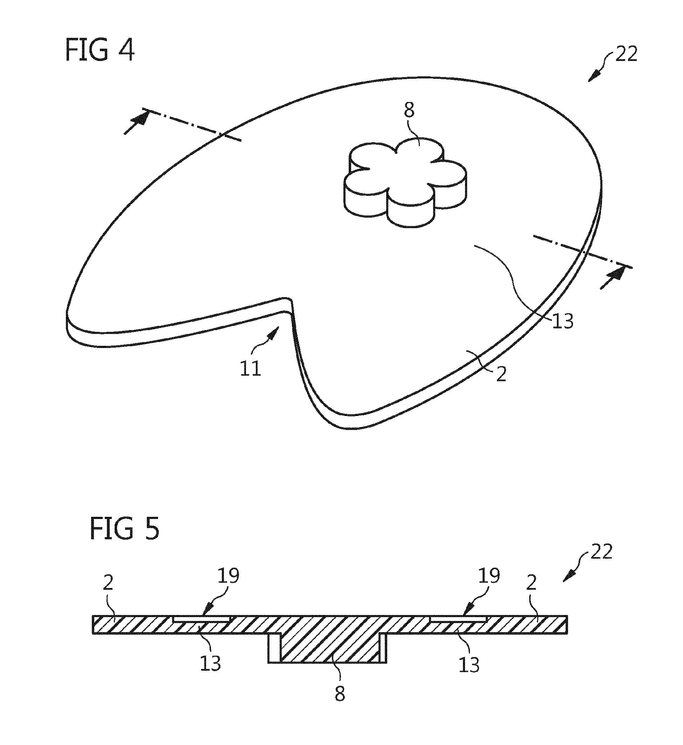

Ein in den Figuren 4 und 5 exemplarisch dargestellter Hufschutz 22 weist kein einstückig ausgebildetes Randprofil 5 an der Unterseite 3 des Randbereichs 2 auf. Der Hufschutz 22 besteht im Wesentlichen aus der Strahlstütze 8, die über die elastische Sohlenabdeckung 13 mit dem Randbereich 2 verbunden ist. An der Oberseite 18 des Hufschutzes 22 ist ebenfalls eine Ausnehmung 19 zur Aufnahme von elastischen Zwischenelementen 20, 21 vorgesehen.

Der in den Figuren 4 und 5 gezeigte Hufschutz 22 kann zwischen einem nicht dargestellten konventionellen Hufeisen und der Unterseite des Hufs angeordnet und zusammen mit dem Hufeisen an dem Huf befestigt werden. Auf diese Weise ist es möglich, sowohl die Strahlstütze 8 als auch die elastischen Zwischenelemente 20, 21 an dem Huf zu befestigen und dennoch ein konventionelles Hufeisen zum Beschlagen des Pferdes verwenden.

## Patentansprüche

1. Hufschutz (1, 22) aus Kunststoff mit einem U-förmigen Randbereich (2), der an einer Unterseite (3) ein eine Aufstandsfläche (6) bildendes Randprofil (5) aufweist oder mit einem eine Aufstandsfläche (6) bildenden Randprofil verbindbar ist, und mit einer Strahlstütze (8), die über Stege (10) mit Schenkelenden (12) des Randbereichs (2) verbunden ist, **dadurch gekennzeichnet, dass** die Strahlstütze (8) in einem mittleren Bereich auf der Aufstandsfläche (6) aufsteht und allseitig über eine elastische Sohlenabdeckung (13) mit dem Randbereich (2) verbunden ist.

2. Hufschutz (1, 22) nach Anspruch 1, **dadurch gekennzeichnet, dass** auf einer Oberseite des Hufschutzes (1) elastische Zwischenelemente lösbar angeordnet sind.

3. Hufschutz (1, 22) nach Anspruch 2, **dadurch gekennzeichnet, dass** an der Oberseite (18) des Hufschutzes (1) eine oder mehrere Ausnehmungen (19) zur Aufnahme von elastischen Zwischenelementen (20, 21) ausgebildet sind.

4. Hufschutz (1, 22) nach Anspruch 2 oder Anspruch 3, **dadurch gekennzeichnet, dass** die elastischen Zwischenelemente (20, 21) zwei verschiedenen Grundformen, nämlich einem geraden Abschnitt (20) und einem näherungsweise halbkreisförmigen Abschnitt (21) aufweisen.

5. Hufschutz (1, 22) nach einem der vorangehenden Ansprüche, **dadurch gekennzeichnet, dass** die Strahlstütze (8) an ihrer Unterseite (3) ein Stützprofil (9) aufweist.

6. Hufschutz (1, 22) nach einem der vorangehenden Ansprüche, **dadurch gekennzeichnet, dass** zwischen den V-förmig angeordneten Stegen (10) eine Sollbruchstelle (11) ausgebildet ist.

7. Hufschutz (1, 22) nach einem der vorangehenden Ansprüche, **dadurch gekennzeichnet, dass** eine Unterseite (3) des Randprofils (2) in einem vorderen Bereich (14) in einem Winkel zur Aufstandsfläche (6) geneigt ist.

8. Hufschutz (1, 22) nach einem der vorangehenden Ansprüche, **dadurch gekennzeichnet, dass** eine Unterseite (3) des Randprofils (2) in einem hinteren Bereich (16) der Sohlenenden (12) in einem Winkel zur Aufstandsfläche (6) geneigt ist.

9. Hufschutz (1, 22) nach einem der vorangehenden Ansprüche, **dadurch gekennzeichnet, dass** in dem Randbereich (2) eine Einlage eingebettet ist.

10. Hufschutz (1, 22) nach Anspruch 7, **dadurch gekennzeichnet, dass** die Einlage ein Metallgeflecht oder ein Metallprofilelement ist.

11. Hufschutz (1, 22) nach einem der vorangehenden Ansprüche, **dadurch gekennzeichnet, dass** der Hufschutz (1, 22) aus einem Kunststoffmaterial mit einem Shore-A-Härtewert von 92 bis 94 besteht.
